Europäisches Patentamt

European Patent Office

Office européen des brevets

(19)

(11) Veröffentlichungsnummer: **0 238 816**
**B1**

(12) **EUROPÄISCHE PATENTSCHRIFT**

(45) Veröffentlichungstag der Patentschrift: **03.10.90**

(51) Int. Cl.⁵: **G 05 D 7/01, F 15 B 1/02**

(21) Anmeldenummer: **87101693.7**

(22) Anmeldetag: **07.02.87**

(54) **Regelventil.**

(30) Priorität: **22.02.86 DE 8604762 u**

(43) Veröffentlichungstag der Anmeldung:
**30.09.87 Patentblatt 87/40**

(45) Bekanntmachung des Hinweises auf die
Patenterteilung:
**03.10.90 Patentblatt 90/40**

(84) Benannte Vertragsstaaten:
**AT CH DE ES FR GB IT LI NL SE**

(56) Entgegenhaltungen:
**AT-B- 207 642
DE-B-1 267 482
GB-A- 966 137
GB-A-1 262 772
US-A-2 593 315
US-A-2 989 086
US-A-4 196 753**

**Die Akte enthält technische Angaben, die nach
dem Eingang der Anmeldung eingereicht
wurden und die nicht in dieser Patentschrift
enthalten sind.**

(73) Patentinhaber: **Kobold, Klaus
Sodener Strasse 120
D-6233 Kelkheim (DE)**

(72) Erfinder: **Kobold, Klaus
Sodener Strasse 120
D-6233 Kelkheim (DE)**

(74) Vertreter: **Keil, Rainer A., Dipl.-Phys. Dr. et al
KEIL & SCHAAFHAUSEN Patentanwälte
Eysseneckstrasse 31
D-6000 Frankfurt am Main 1 (DE)**

EP 0 238 816 B1

Courier Press, Leamington Spa, England.

**Beschreibung**

Die Erfindung betrifft ein Regelventil zur selbsttätigen Konstanthaltung von Durchflußmengen von Fluiden mit einem im wesentlichen hohlzylindrischen Ventilgehäuse, dessen Austrittsöffnung im Durchmesser kleiner ist als die, z.B. von einer Bohrung gebildeten, Eingangsöffnung, wobei in dem Ventilgehäuse eine Regelblende aus elastischem Material an ihrem Außenrand eingespannt ist. welche in ihrem Außenumfangsbereich Durchlässe und eine mittige Durchgangsöffnung hat und — unter dem anstehenden Druck des Fluides — bis zu einer in Strömungsrichtung in dem Ventilgehäuse nachgeordneten Lochscheibe durchbiegbar ist, so daß zwar die Durchlässe verschlossen aber die Durchgangsöffnung weiterhin mit der größeren Öffnung der Lochscheibe in Strömungsverbindung steht.

Nahezu in jedem Industriezweig sind Rohrleitungssysteme für Fluide z.B. Wasser oder Gase im Einsatz, aus denen variierende Mengen entnommen werden, die zu Druckschwankungen führen. Zur Regelung einer gleichbleibenden Durchflußmenge sind Handregulierventile oder über Meßgeräte gesteuerte Regeleinrichtungen erforderlich. Bei der Verwendung von Meßgeräten muß noch beachtet werden, daß die Rohre auf beiden Seiten gerade verlaufen müssen. Um optimales Betriebsverhalten der Rohrleitungssysteme zu erhalten, müssen bei kleinen Anlagen, langwierige, oft sehr ungenaue Einreguliervorgänge durchgeführt werden und größere Anlage lassen sich nur mit aufwendigen, kostspieligen Regeleinrichtungen abgleichen. Zur Aufrechterhaltung eines konstanten Durchflußes muß deshalb nachteiligerweise zuerst der Durchfluß gemessen und dann eine Information an ein Regelventil weitergegeben werden, das entsprechend geöffnet oder geschlossen wird, wozu Hilfsmittel erforderlich sind. Es ist auch schon vorgeschlagen worden, in einem zur selbsttätigen Konstanthaltung von Durchflußmengen von Fluiden bestimmten Regelventil in Strömungsrichtung nacheinander eine starre Blendenscheibe und eine aus Gummi bestehenden Regelscheibe anzuordnen. Die starre Blendenscheibe kann unter dem Druck des Fluids unter axialer Verschiebung an die Regelscheibe angedrückt werden, wodurch sich der Öffnungsquerschnitt der Durchflußöffnung der Regelscheibe je nach Druckdifferenz über dem Regelventil verändert. Derartige Regelventile sind jedoch unbefriedigend in ihrem Konstanthaltungsverhalten und für bestimmte Medien, insbesondere aggressive Medien nicht anwendbar, da diese das Gummimaterial der Regelscheibe beeinträchtigen. Außerdem unterliegt letzteres der Alterung, so daß die Funktion des Regelventils leidet.

Aus der DE-B-1 267 482 ist eine Drosseleinrichtung, welche in einer Rohrleitung angeordnet eine elastische Scheibe mit einer mittigen Öffnung und am Rand liegenden Durchbrüchen und eine starre Platte mit einer Mittelöffnung aufweist, wobei die starre Platte mit einem zu der elastischen Scheibe hin gerichteten Vorsprung versehen ist. Dieser Vorsprung dient dazu, die Flüssigkeit zumindest teilweise radial nach außen umzulenken und dadurch einen Rückstaudruck zu erzeugen, welche der neu zuströmenden Flüssigkeit entgegenwirkt. Die Mittelöffnung der starren Platte muß zwangsläufig relativ eng sein, da sie auf der der elastischen Scheibe zugewandten Seite von dem ringförmigen Vorsprung und einem ebenfalls ringförmigen Stau- und Umlenkraum umgeben wird.

Der Erfindung liegt daher die Aufgabe zugrunde, ein Regelventil der eingangs genannten Art vorzuschlagen, bei dem insbesondere die Nachteile der bekannten Einrichtungen vermieden werden und auf einfache Weise die Durchflußmenge unabhängig von dem sich verändernden, über dem Regelventil anstehenden Differenzdruck zuverlässig und selbsttätig bei optimaler Regelcharakteristik konstant gehalten wird.

Diese Aufgabe wird erfindungsgemäß im wesentlichen dadurch gelöst, daß die Lochscheibe auf ihrer Anströmseite kegelförmig vertieft ist und die elastische Regelblende — unter dem Druck des Fluids — bis an die Innenwandfläche der Vertiefung andrückbar ist.

Die elastische Regelblende wird durch die über dem Regelventil herrschende Druckdifferenz durchgebogen. Sie braucht nicht aus kompressiblem Material wie Gummi zu bestehen, sondern kann aus Stahl, insbesondere Edelstahl, o. dgl. dauerhaften biegeelastischen Materialien gefertigt sein. Die wirksame Ventilöffnung des erfindungsgemäßen Regelventils verringert sich nur allmählich bis auf Null, wenn sich der Druckunterschied erhöht, oder öffnet sich voll, wenn der Druckunterschied fällt. Üblicherweise ist es nicht einfach, die Relation zwischen Druckunterschied und der für konstanten Durchfluß erforderlichen Ventilöffnung herzustellen. Hinzu kommt, daß nur der Druckunterschied, nicht der absolute Druck, die erforderliche Ventilöffnung einstellen muß. Druckschwankungen können zudem entweder vor oder hinter dem Ventil auftreten. Aus diesen verschiedenen Gründen gab es bisher keine einfache wirtschaftliche Regelmethode zur Aufrechterhaltung eines konstanten Durchflusses. Bei dem erfindungsgemäßen Regelventil werden die Funktionen der Durchflußmessung und die Regelung des Ventilöffnungsquerschnittes miteinander vereinigt. Je nach Differenzdruck ist die wirksame Ventilöffnung mehr oder weniger geöffnet oder geschlossen. Bei äußerster Differenzdruckbelastung (beispielsweise 20 bar) liegt die elastische Regelblende voll flächig an der Lochscheibe an, so daß nur noch der Öffnungsquerschnitt der Durchgangsöffnung zur Verfügung steht und das Regelventil dann als feststehende Blende arbeitet. Verringert sich die Druckdifferenz, so gibt die Regelblende entsprechend ihrer Federcharakteristik einen größeren Strömungsquerschnitt an der Lochscheibe allmählich frei. Durch diesen Vorgang ist gewährleistet, daß sich das Ventil selbsttätig den unterschiedlichen Druckverhältnissen anpaßt und eine ständig gleichbleibende Fluidmenge durch das Regelventil und damit auch die mit ihm bestückte Rohrleitung fließt. Für den Regelvorgang sind weder gesonderte Hilfsmittel noch gesonderte Hilfsenergien erforderlich.

Im speziellen Fall kann die kegelförmige Vertiefung der Lochscheibe dadurch gebildet sein, daß diese als trichterförmiges Bauelement mit im wesentlichen gleicher Wandstärke ausgebildet ist. welches mit seinem verjüngenden Ende in Richtung der Austrittsöffnung des Ventilgehäuses weist. Die kegelförmige Vertiefung sorgt für den erforderlichen Raum, in welchen sich die Regelblende durchbiegen kann, während die Regelblende und Lochscheibe in ihrem Außenumfangsbereich aneinanderliegend axial fest in dem Ventilgehäuse eingespannt sein können. Die kegelförmige Vertiefung sorgt ferner dafür, daß bei ansteigender Druckdifferenz und der zunehmenden Durchbiegung der Regelblende die erforderliche Verringerung der wirksamen Ventilöffnung allmählich erfolgt, bis die Regelblende unmittelbar an der Lochscheibe großflächig anliegt und die Ventilöffnung durch die Öffnung der Lochscheibe alleine bestimmt wird.

Besonders vorteilhaft ist es, wenn die Regelblende aus mindestens zwei überkreuzliegenden und wenigstens im Umfangbereich der Durchgangsöffnung miteinander verbundenen, z. B. vernieteten, elastischen Metallplättchen besteht, die im Kreuzungsbereich die Durchgangsöffnung aufweisen. Am äußeren Rand ist die so ausgebildete Regelblende mit Hilfe der äußeren Enden der Metallplättchen in dem Ventilgehäuse elastisch durchbiegsam eingespannt. Durch die Wahl der Metallplättchen hinsichtlich Material. Stärke, Form und Einspannung kann die Federcharakteristik an verschiedene Strömungsverhältnisse und Einsatzzwecke angepaßt werden.

In jeder Richtung der überkreuzliegenden Metallplättchen können jeweils mehrere derartige Metallplättchen federpaketartig übereinander liegen, wodurch die Federcharakteristik günstig beeinflußt werden kann.

Gemäß einer besonderen Ausgestaltung der Erfindung verjüngen sich die elastischen Metallplättchen zumindest zu ihren Enden hin. d. h. sind dort beispielsweise dreieckförmig oder trapezförmig ausgebildet, oder die Metallplättchen sind insgesamt rhombusförmig ausgebildet. Auf diese Weise kann leicht bei Einhaltung der gewünschten Strömungsverhältnisse eine gewünschte Federcharakteristik erzielt werden.

Die Verbindungsniet der Metallplättchen nimmt vorzugsweise die Durchflußöffnung der Regelblende auf.

Gemäß einer anderen Ausführungsform des Regelventils besteht die Regelblende aus mindestens einem einteiligen scheibenförmigen elastischen Metallplättchen, welches am Umfang als die Durchlässe wirkende Aussparungen, vorzugsweise Randaussparungen, hat. Ein solches Metallplättchen ist einfach herzustellen und hinsichtlich seiner Einspannung am Außenumfangrand zu montieren. Von solchen einteiligen scheibenförmigen elastischen Metallplättchen, die, bis auf die Aussparungen und die Durchgangsöffnung den Strömungsquerschnitt des Ventilgehäuses überdecken, können auch mehrere federpaketartig übereinandergelegt werden, um die Federcharakteristik zu bestimmen.

Die elastische Regelblende besteht beispielsweise aus Messing oder Stahl. insbesondere Edelstahl, mit hoher elastischer Dehnung.

Wie bereits erwähnt können Regelblende und Lochscheibe an ihrem Außenumfang aufeinanderliegen und mittels eines Klemmringes axial ortsfest in dem Ventilgehäuse eingespannt sein, was eine einfache Montage und insbesondere auch einen leichten Austausch dieser beiden Bauteile in Anpassung an besondere Einsatzzwecke gewährleistet.

Der Durchmesser der Öffnung der Lochscheibe entspricht zweckmäßigerweise etwa dem Durchmesser der Austrittsöffnung des Ventilgehäuses.

Der Erfindungsgedanke läßt sich auch für ein Regelventil nutzen, das für große Fluiddurchflußmengen angewendet werden soll. Zu diesem Zweck wird mit der Erfindung vorgeschlagen, in einem, z.B. scheibenförmigen Ventilgehäuse zwei oder mehrere Regelventile der zuvor im einzelnen näher erörterten Art auszubilden.

Das Ventilgehäuse kann für die Erleichterung der Montage mit Außengewinde und/oder Innengewinde ausgestattet sein.

Nachfolgend werden anhand der Zeichnung Ausführungsbeispiele der Erfindung näher erläutert.

Es zeigen:

Fig. 1 eine Schnittansicht eines Ausführungsbeispiels der Erfindung.

Fig. 2 eine Draufsicht des Ausführungsbeispiels nach Fig 1.

Fig. 3a bis 3c Draufsichten verschiedener Ausführungsformen der erfindungsgemäßen Regelblende, und

Fig. 4 ein Ausführungsbeispiel, bei dem mehrere erfindungsgemäße Regelventile in einem Ventilgehäuse vorgesehen sind.

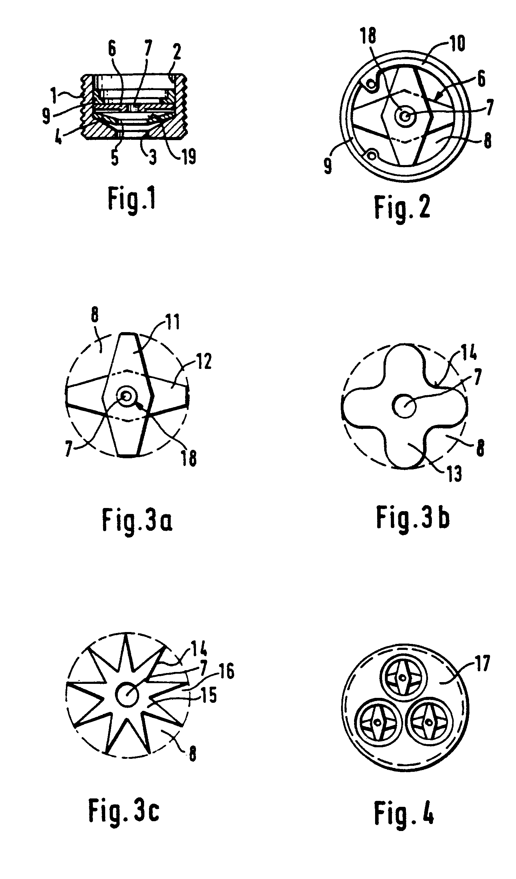

Das Ausführungsbeispiel nach Fig. 1 zeigt ein Ventilgehäuse 1 mit einer im wesentlichen zylindrischen, eine Eintrittsöffnung für ein Fluid bildenden Bohrung 2, die sich an ihrem Ende konisch zu einer Austrittsöffnung 3 hin verjüngt. In der Bohrung 2 befindet sich im Bereich der Austrittsöffnung 3 eine auf der Anströmseite kegelförmig vertiefte Lochscheibe 4 mit einer Öffnung 5, deren Durchmesser etwa demjenigen der Austrittsöffnung 3 entspricht. An dem Umfangsrand der Lochscheibe 4 liegt eine Regelblende 6 aus elastischem Material, welche eine mittige Durchgangsöffnung 7 und äußere Durchlässe 8 hat, wie aus Fig. 2 ersichtlich. Die Durchgangsöffnung 7 ist kleiner als die Öffnung 5 und die Austrittsöffnung 3. Die Durchlässe 8 enden in jedem Falle radial außerhalb der Öffnung 5. Lochscheibe 4 und Regelblende 6 werden in ihrer axialen Lage am Außenumfang durch einen Zwischenring 9 und einen Klemmring 10 gehalten. Fig. 1 zeigt das Regelventil in geöffnetem Ausgangszustand.

Die Regelblende 6 kann unterschiedliche Ausführungsformen haben. Nach Fig. 3a besteht sie aus mindestens zwei über Kreuz liegenden rhombusförmigen dünnen und elastischen Metallfederplättchen 11 und 12, die fest zB. durch eine Verbindungsniet 18, miteinander verbunden sind und die mittige Durchgangsöffnung 7 bildet. Es können auch über Kreuz jeweils mehrere Metallplättchen 11, 12 federpaketartig übereinander liegend vorgesehen sein. Die Federplattchen 11, 12 sind z.B. rhombusförmig, oder an ihren Enden sind sie zungenähnlich, d.h. dreieckförmig, trapezförmig oder dgl. ausgebildet.

Die Regelblende 6 kann auch als einteiliges dünnes scheibenförmiges Metallplättchen 13 aus elastischem Material, wie Stahl, (Fig. 3b) mit am Außenumfang vorgesehenen Randaussparungen 14 ausgebildet sein, wobei die Aussparungen 14 als die Durchlässe 8 dienen und mittig die Durchgangsöffnung 7 vorgesehen ist. Auch hier können mehrere einteilige Metallplättchen 13 federpaketartig übereinander liegen.

Fig. 3c zeigt eine andere Ausführungsform der Regelblende 6 als einteiliges Metallplättchen 15 mit mittiger Durchgangsbohrung 7, wobei die Aussparungen 14 Schlitze 16 bilden.

Die Regelblende 6 ist jeweils so elastisch ausgebildet, daß sie sich unter dem Druck des Fluids in die Vertiefung 19 bis zum Anlegen an die Lochscheibe 4 durchbiegen kann. Als Werkstoff ist deshalb Material wie z.B. Stahl, insbesondere Edelstahl. Messing o. dgl. mit hoher elastischer Dehnung geeignet. Dünnes Federbandmaterial mit großem Elastizitätsmodul ist z.B. geeignet und kostengünstig für die Herstellung.

Die Durchflußleistung durch das Regelventil wird durch den Druckunterschied vor und hinter dem Ventilgehäuse 1 sowie durch die Größe der wirksamen Ventilöffnung bestimmt. Um eine konstante Durchflußleistung zu erhalten, muß sich die Ventilöffnung schließen, wenn sich der Druckunterschied erhöht oder öffnen, wenn der Druckunterschied fällt. Bei dem erfindungsgemäßen Regelventil wird eine konstante Durchflußleistung mittels der elastischen Regelblende 6 erzielt, die die in Strömungsrichtung danach angeordnete trichterförmige Lochscheibe 4 je nach Größe des Differenzdruckes mehr oder weniger öffnet bzw. schließt. Bei äußerster Druckdifferenz, z.B. ca. 20 bar, liegt die elastische Regelblende 6 voll an der zum Beispiel ringtrichterförmig ausgebildeten Lochscheibe 4, an, so daß nur noch die mittige Durchgangsöffnung 7 zur Durchströmung zur Verfügung steht und das Regelventil dann als feststehende Blende arbeitet. Verringert sich der Druck, so gibt die Regelblende 6 aufgrund ihrer Elastizität einen größeren Strömungsquerschnitt frei. Das erfindungsgemäße Regelventil paßt sich somit automatisch den unterschiedlichen Druckverhältnissen an, so daß durch das Regelventil und die damit bestückte Rohrleitung eine ständig gleichbleibende Flüssigkeitsmenge fließt. Das Regelventil ist besonders geeignet zum Abgleichen von Rohrsystemen und kann einfach bei geringem Platzbedarf eingebaut werden. Von Hand zu bewegende Teile wie z.B. Handrad oder Ventilspindel sowie elektrische oder pneumatische Steuerleitungen entfallen. Die Regelgenauigkeit ist relativ hoch und liegt bei ± 0,2 l/min.

Das neue Regelventil kann auch in Rohrleitungssysteme mit großen Querschnitten eingesetzt werden, wenn, wie in Fig. 4 gezeigt, mehrere Regelventile in einem z.B. scheibenförmigen Ventilgehäuse 17 ausgebildet sind.

Der Verwendungszweck des erfindungsgemäßen Regelventils ist vielseitig. Es kann bei Rohrleitungssystemen in den verschiedensten Industriezweigen wie z.B. Sanitär- und Haustechnik, Heizungs-, Klima- und Kältetechnik sowie bei Kreiselpumpen und anderen Systemen mit erforderlicher Durchflußkonstanthaltung eingesetzt werden.

Bezugszeichenliste:
1 Ventilgehäuse.
2 Bohrung.
3 Austrittsöffnung.
4 Lochscheibe.
5 Öffnung.
6 Regelblende.
7 Durchgangsöffnung.
8 Flächendurchlässe.
9 Zwischenring.
10 Klemmring.
11 Metallplättchen.
12 Metallplättchen.
13 Metallplättchen.
14 Randaussparungen.
15 Metallplättchen.
16 Schlitze.
17 Scheibe.
18 Verbindungsniet.
19 Vertiefung.

**Patentansprüche**

1. Regelventil zur selbsttätigen Konstanthaltung von Durchflußmengen von Fluiden mit einem im wesentlichen hohlzylindrischen Ventilgehäuse (1) dessen Austrittsöffnung (3) im Durchmesser kleiner ist als die z.B. von einer Bohrung gebildete Eingangsöffnung (2), wobei in dem Ventilgehäuse (1) eine Regelblende (6) aus elastischem Material an ihrem Außenrand eingespannt ist, welche in ihrem Außenumfangsbereich Durchlässe (8) und eine mittige Durchgangsöffnung (7) hat und — unter dem anstehenden Druck des Fluides — bis zu einer in Strömungsrichtung in dem Ventilgehäuse (1) nachgeordneten Lochscheibe (4) durchbiegbar ist, so daß zwar die Durchlässe (8) verschlossen aber die Durchgangsöffnung (7) weiterhin mit der größeren Öffnung (5) der Lochscheibe (4) in Strömungsverbindung steht, dadurch gekennzeichnet, daß die Lochscheibe (4) auf ihrer Anströmseite kegelförmig vertieft ist und die elastische Regelblende (6) — unter dem Druck des Fluids — andrückbar ist, bis sie unmittelbar an der Innenwandfläche der Vertiefung großflächiganliegt.

2. Regelventil nach Anspruch 1, dadurch gekennzeichnet, daß die Regelblende (6) aus mindestens zwei überkreuzliegenden und wenigstens im Umfangsbereich der Durchgangsöffnung (7) miteinander verbundenen, z.B. vernieteten, elastischen Metallplättchen (11, 12) besteht, die im Kreuzungsbereich die Durchgangsöffnung (7) aufweisen.

3. Regelventil nach Anspruch 2, dadurch gekennzeichnet, daß in jeder Richtung der überkreuzliegenden Metallplättchen (11, 12) jeweils mehrere derartige Metallplättchen (11, 12) federpaketartig übereinander liegen.

4. Regelventil nach Anspruch 2 oder 3, dadurch gekennzeichnet, daß die elastischen Metallplättchen (11, 12) sich zumindest an ihren äußeren Enden z.B. dreieckförmig oder trapezförmig verjüngen oder daß die Metallplättchen (11, 12) insgesamt rhombusförmig ausgebildet sind.

5. Regelventil nach einem der Ansprüche 2 bis 4, dadurch gekennzeichnet daß der Verbindungsniet (18) die Durchgangsöffnung (7) der Regelblende (6) aufnimmt.

6. Regelventil nach Anspruch 1, dadurch gekennzeichnet, daß die Regelblende (6) aus mindestens einem scheibenförmigen elastischen Metallplättchen (13) besteht, welches am Umfang als die Durchlässe wirkende Aussparungen (14), vorzugsweise Randaussparungen, hat.

7. Regelventil nach einem der Ansprüche 1 bis 6, dadurch gekennzeichnet, daß die elastische Regelblende (6) aus Messing oder Stahl, insbesondere Edelstahl mit hoher elastischer Dehnung besteht.

8. Regelventil nach einem der Ansprüche 1 bis 7, dadurch gekennzeichnet daß Regelblende (6) und Lochscheibe (4) an ihrem Außenumfang aufeinanderliegen und mittels eines Klemmrings (10) axial ortsfest in dem Ventilgehäuse (1) eingespannt sind.

9. Regelventil nach einem der Ansprüche 1 bis 8, dadurch gekennzeichnet, daß der Durchmesser der Öffnung (5) der Lochscheibe (4) etwa dem Durchmesser der Austrittsöffnung (3) des Ventilgehäuses (1) entspricht.

10. Regelventil zur Anwendung für große Fluiddurchflußmengen, dadurch gekennzeichnet daß in einem z.B. scheibenförmigen Ventilgehäuse (17) zwei oder mehrere Regelventile nach einem der Ansprüche 1 bis 9 nebeneinander ausgebildet sind.

**Revendications**

1. Soupape de réglage pour la stabilisation automatique de débits de fluides, comprenant un corps (1) de soupape sensiblement cylindrique creux, dont l'ouverture de sortie (3) est plus petite en diamètre que l'ouverture d'admission (2) formée par exemple par un alésage, un obturateur de réglage (6) en matière élastique étant serré par son bord extérieur dans le corps (1) de soupape, obturateur qui possède dans sa zone circonférentielle extérieure des passages (8) et en son centre une ouverture de passage (7) et qui est susceptible, sous la pression du fluide, de fléchir jusqu'à un diaphragme (4) disposé en aval dans le sens d'écoulement dans le corps (1) de soupape, de sorte que les passages (8) soient certes obturés, mais que l'ouverture de passage (7) reste en liaison d'écoulement avec l'ouverture (5) plus grande du diaphragme (4), caractérisée par le fait que côté amont, le diaphragme (4) est creusé en formant un cône et l'obturateur de réglage (6) élastique peut être poussé sous la pression du fluide, jusqu'à être appliqué sur une grande surface directement contre la surface de paroi intérieure du creux.

2. Soupape de réglage selon la revendication 1, caractérisée par le fait que l'obturateur de réglage (6) se compose d'au moins deux plaquettes métalliques (11, 12) élastiques qui se croisent, qui sont reliées entre elles, par exemple rivetées, au moins dans la zone circonférentielle de l'ouverture de passage (7) et qui présentent l'ouverture de passage (7) dans la zone de croisement.

3. Soupape de réglage selon la revendication 2, caractérisée par le fait que dans chaque sens des plaquettes métalliques (11, 12) croisées, chaque fois plusieurs de ces plaquettes métalliques (11, 12) sont superposées à la manière d'un paquet de ressorts.

4. Soupape de réglage selon revendication 2 ou 3, caractérisée par le fait que les plaquettes métalliques (11, 12) élastiques s'effilent au moins à leurs extrémités extérieures, par exemple sous une forme triangulaire ou trapézoïdale, ou que les plaquettes métalliques (11, 12) sont réalisées entièrement sous forme de losange.

5. Soupape de réglage selon l'une des revendications 2 à 4, caractérisée par le fait que le rivet de liaison (18) contient l'ouverture de passage (7) de l'obturateur de réglage (6).

6. Soupape de réglage selon la revendication 1, caractérisée par le fait que l'obturateur de réglage (6) se compose au moins d'une plaquette métallique (13) élastique en forme de disque, qui présente sur sa circonférence des échancrures (14), de préférence des évidements de bord, agissant comme passages.

7. Soupape de réglage selon l'une des revendications 1 à 6, caractérisée par le fait que l'obturateur de réglage (6) élastique est en laiton ou en acier, notamment en acier spécial, avec une grande élasticité.

8. Soupape de réglage selon l'une des revendications 1 à 7, caractérisée par le fait que l'obturateur de réglage (6) et le diaphragme (4) sont appliqués l'un contre l'autre par leurs bords extérieurs et sont serrés au moyen d'une bague de serrage (10) de façon fixe axialement dans le corps (1) de soupape.

9. Soupape de réglage selon l'une des revendications 1 à 8, caractérisée par le fait que le diamètre de l'ouverture (5) du diaphragme (4) correspond approximativement au diamètre de l'ouverture de sortie (3) du corps (1) de soupape.

10. Soupape de réglage pour l'utilisation pour de grands débits de fluides, caractérisée par le fait que dans un corps (17) de soupape par exemple en forme de disque, deux ou plusieurs soupapes de réglage selon l'une des revendications 1 à 9 sont réalisées les unes à côté des autres.

**Claims**

1. A control valve for the autonomous maintenance of constant fluid flow rates, having a substantially cylindrical hollow valve housing (1), the outlet orifice (3) of which is smaller than that of the inlet orifice (2), for example the inlet bore, in which valve the housing (1) contains a peripherally constrained control diaphragm (6) of some resilient material, which has peripheral outlets (8) and a central escape orifice (7), and can yield — under the resultant fluid pressure — as far as a downstream aperture disc (4) disposed in the valve housing (1), so that whereas the outlets (8) are shut off the escape orifice (7) still communicates with the larger aperture (5) in the downstream aperture disc (4), characterized in that the upstream face of the aperture disc (4) is conically dished and the resilient control diaphragm (6) can be urged — under the fluid pressure — until it is stretched out directly on the inner wall of the dishing.

2. A control valve as in Claim 1, characterized in that the control diaphragm (6) is made up of at least two transversely disposed resilient metal leaves (11, 12), which contain escape orifices (7) in the overlap region and are joined — for example welded together — round the periphery of the escape orifices (7) at least.

3. A control valve as in Claim 2, characterized in that a plurality of metal leaves (11, 12) as specified is stacked in the manner of a leaf spring in all directions of the transversely disposed metal leaves (11, 12).

4. A control valve as in Claim 2 or 3, characterized in that the resilient metal leaves (11, 12) are tapered towards or at least at their outer ends, in triangle or trapeze formation for example, or that the metal leaves (11, 12) as a whole form a rhombus.

5. A control valve as in any of Claims 2 to 4, characterized in that the joint (18) subtends the escape orifice (7) of the control diaphragm (6).

6. A control valve as in Claim 1, characterized in that the control diaphragm (6) consists of a disc-shaped resilient metal leaf (13), with openings (14), preferably peripheral openings, which serve as outlets.

7. A control valve as in any of Claims 1 to 6, characterized in that the resilient control diaphragm (6) is made from brass or steel, more particularly alloy steel with a high elastic strain limit.

8. A control valve as in any of Claims 1 to 7, characterized in that the control diaphragm (6) and the aperture disc (4) are stacked closely round their peripheries and clamped rigidly together in the valve housing (1) by means of a clamping ring (10).

9. A control valve as in any of Claims 1 to 8, characterized in that the aperture (5) in the aperture disc (4) is approximately of the same diameter as the outlet orifice (3) in the valve housing (1).

10. A control valve for applications requiring high fluid throughputs, characterized in that two or more control valves as in any of Claims 1 to 9 are disposed side by side in a single, for example disc-shaped, valve housing (17).

Fig.1

Fig. 2

Fig.3a

Fig.3 b

Fig.3c

Fig. 4

1